# EUROPEAN PATENT APPLICATION

(11) **EP 4 733 155 A1**
(43) Date of publication of application: **29.04.2026**
(21) Application number: 24850539.8
(22) Date of filing: 29.03.2024
(51) Int. Cl.: B60T 8/176, B60L 7/10, B60L 7/26

(54) **CONTROL METHOD AND CONTROL APPARATUS**

(30) Priority: 07.08.2023 CN 202310987520
(71) Applicant: Shenzhen Yinwang Intelligent Technologies Co., Ltd., Shenzhen, Guangdong 518110 (CN)
(72) Inventor: WENG, Ziyu, Shenzhen, Guangdong 518129 (CN); MA, Wentao, Shenzhen, Guangdong 518129 (CN); WANG, Guangyi, Shenzhen, Guangdong 518129 (CN); LV, Shangwei, Shenzhen, Guangdong 518129 (CN)
(74) Representative: Gill Jennings & Every LLP
(86) International application number: PCT/CN2024/084764
(87) International publication number: WO 2025/030882

(57) **Abstract**

A control method and a control apparatus are disclosed. The control method includes: obtaining an electric braking parameter determined based on a traveling status of a vehicle, where a braking force for the vehicle is provided by an electric brake mechanism based on the electric braking parameter when the vehicle is in an energy regeneration state; and when the vehicle exits the energy regeneration state because a stability control function is triggered, controlling, based on the electric braking parameter, an active booster module to generate corresponding brake fluid pressure in a brake wheel cylinder. The control method may be applied to an intelligent vehicle or a new energy vehicle. When the vehicle exits the energy regeneration state because the stability control function is triggered, unexpected acceleration caused by energy regeneration exit can be avoided, and driving safety of the vehicle can be ensured.

## Description

This application claims priority to Chinese Patent Application No. 202310987520.5, filed with the China National Intellectual Property Administration on August 7, 2023, and entitled "CONTROL METHOD AND CONTROL APPARATUS", which is incorporated herein by reference in its entirety.

### TECHNICAL FIELD

This application relates to the field of new energy vehicles, and more specifically, to a control method and a control apparatus.

### BACKGROUND

For a new energy vehicle like an electric vehicle or a hybrid vehicle, a drive motor may be usually used to apply a negative torque to a wheel to apply a braking force to the vehicle, so that the vehicle may be braked without triggering a brake system, and kinetic energy of the vehicle may be converted into electric energy to implement an energy regeneration effect. An endurance range of the vehicle can be increased to a specific extent by using an energy regeneration function. However, in a process of braking the vehicle by using the energy regeneration function, if a road adhesion coefficient suddenly decreases, for example, when the vehicle travels over a speed bump or travels into a slippery road, a braking force on the wheel cannot be resisted due to a sudden drop in adhesion on the road. As a result, the wheel tends to be locked, a stability control function like an antilock brake system (antilock brake system, ABS), electric brakeforce distribution (electric brakeforce distribution, EBD), or electronic stability control (electronic stability control, ESC) of the vehicle is triggered, and the energy regeneration function is exited. As a wheel speed of the vehicle is restored, the stability control function is exited without restoring the energy regeneration function, and consequently the braking force on the wheel suddenly decreases. In this case, forward lurching of the vehicle may be caused to affect ride comfort, and even vehicle instability may be caused to affect driving safety.

Therefore, how to cope with vehicle instability caused by exit of the energy regeneration function becomes an urgent problem to be resolved.

### SUMMARY

This application provides a control method and a control apparatus. When a vehicle exits an energy regeneration state because a stability control function is triggered, unexpected acceleration caused by energy regeneration exit can be avoided, and driving safety of the vehicle can be ensured.

According to a first aspect, a control method is provided. The method may be performed by a computing platform, or may be performed by a processor or a chip on the computing platform, or may be performed by a vehicle.

The method includes: obtaining a first electric braking parameter, where the first electric braking parameter is determined based on a traveling status of the vehicle, the vehicle includes an electric brake mechanism and a hydraulic brake mechanism, the hydraulic brake mechanism includes an active booster module and a brake wheel cylinder, the active booster module is configured to control pressure of brake fluid in the brake wheel cylinder, and when the vehicle is in an energy regeneration state, a braking force for the vehicle is provided by the electric brake mechanism based on the first electric braking parameter; and when a stability control function is triggered, controlling, based on the first electric braking parameter, the active booster module to generate first brake fluid pressure in the brake wheel cylinder.

In an embodiment, when the vehicle is in the energy regeneration state, a target torque for energy regeneration may be determined based on the traveling status of the vehicle. When the stability control function is triggered, the vehicle exits the energy regeneration state. When the vehicle exits the energy regeneration state because the stability control function is triggered, the target torque for energy regeneration may still be determined by using same logic. In other words, the target torque for energy regeneration may still be determined based on the traveling status of the vehicle. The target torque for energy regeneration may be understood as an example of the first electric braking parameter.

In another embodiment, after the energy regeneration state is exited because the stability control function is triggered, regardless of whether the stability control function is triggered, although the energy regeneration state has been exited, the target torque for energy regeneration may still be determined based on the traveling status like a vehicle speed or a pedal opening degree of the vehicle, and the pressure of the brake fluid in the brake wheel cylinder may be adjusted based on the target torque for energy regeneration.

Because the vehicle exits the energy regeneration state when the stability control function is triggered, the braking force applied to the vehicle by the electric brake mechanism suddenly fades. In this application, when the vehicle exits the energy regeneration state because the stability control function is triggered, the hydraulic brake mechanism is controlled to actuate based on an electric braking parameter like the target torque for energy regeneration, and the first brake fluid pressure is generated in the brake wheel cylinder by using an active booster function, so that a braking manner can be switched without intervention of a driver. This can avoid unexpected acceleration caused by energy regeneration exit, and ensure driving safety of the vehicle.

With reference to the first aspect, in some implementations of the first aspect, controlling, based on the first electric braking parameter, the active booster module to generate the first brake fluid pressure in the brake wheel cylinder may include: determining a first hydraulic braking force based on the first electric braking parameter; determining a wheel-end braking force based on the first hydraulic braking force; and controlling, based on the wheel-end braking force, the active booster module to generate the first brake fluid pressure in the brake wheel cylinder.

For example, the first hydraulic braking force may include a target braking force that is expected to be applied to the vehicle by the hydraulic brake mechanism when the active booster function is enabled. The wheel-end braking force may be distributed to each wheel of the vehicle based on a braking force distribution coefficient and a slip rate of the wheel, and corresponding brake fluid pressure may be generated in each brake wheel cylinder.

In an embodiment, it is assumed that a wheel is a drive wheel but is not a brake wheel, that is, the wheel is not provided with a corresponding brake wheel cylinder. In the energy regeneration state, the electric brake mechanism applies a corresponding braking force to the wheel. When energy regeneration is exited because the stability control function is triggered, the hydraulic brake mechanism does not apply a braking force to the wheel.

In another embodiment, it is assumed that a wheel is a drive wheel and a brake wheel, and the stability control function is triggered because the wheel is locked. In the energy regeneration state, the electric brake mechanism applies a wheel-end braking force #1 to the wheel. When energy regeneration is exited because the stability control function is triggered, the hydraulic brake mechanism applies a wheel-end braking force #2 to the wheel. It is considered that the wheel is a locked wheel, and the wheel-end braking force #2 may be less than the wheel-end braking force #1. Correspondingly, more braking forces may be distributed to a non-locked braking force of the vehicle, so that a deceleration of the vehicle remains stable.

In this application, the wheel-end braking force is distributed based on an actual situation of each wheel, so that the deceleration of the vehicle can remain stable while driving stability and driving safety of the vehicle are ensured.

With reference to the first aspect, in some implementations of the first aspect, determining the first hydraulic braking force based on the first electric braking parameter may include: determining the first hydraulic braking force based on the first electric braking parameter when determining that the driver has no braking intent and no acceleration intent.

In this application, a corresponding hydraulic braking force is determined based on the electric braking parameter when the driver has no braking intent and no acceleration intent. This can avoid a fluctuation of the deceleration of the vehicle caused when energy regeneration is exited but the hydraulic braking force is not generated, and can improve driving experience of a user.

With reference to the first aspect, in some implementations of the first aspect, determining the first hydraulic braking force based on the first electric braking parameter may include: determining the first hydraulic braking force based on a braking intent of the driver and the first electric braking parameter.

When the vehicle is in the energy regeneration state, the electric brake mechanism applies a corresponding braking force to the vehicle. Although energy regeneration is exited when the vehicle stability function is triggered, when braking of the vehicle is controlled based on the electric brake parameter by using the hydraulic brake mechanism, when the driver has the braking intent, it may be considered that the driver considers that the electric braking parameter cannot meet a brake requirement of the driver. In this application, the first hydraulic braking force is determined based on the brake requirement of the driver and the electric braking parameter. This helps achieve, in a timely manner, a braking effect expected by the driver.

With reference to the first aspect, in some implementations of the first aspect, the vehicle may have an active safety function, and the method may further include: obtaining a second hydraulic braking force, where the second hydraulic braking force includes a braking force that needs to be provided by the hydraulic brake mechanism to the vehicle when the active safety function is triggered; and determining the first hydraulic braking force based on the first electric braking parameter may include: when the active safety function is triggered, determining the first hydraulic braking force based on the first electric braking parameter and the second hydraulic braking force.

For example, the active safety function may include an automatic emergency braking (automatic emergency braking, AEB) function, or may include another function, for example, cross traffic braking (cross traffic braking, CTB), that requires the active booster module to actuate to provide a braking force.

In this application, when the active safety function has a brake requirement, the first hydraulic braking force is determined based on the first electric braking parameter and the second hydraulic braking force. This can ensure good coordination between an energy regeneration function, the stability control function, and the active safety function, and can avoid unexpected acceleration or deceleration.

With reference to the first aspect, in some implementations of the first aspect, the method may further include: when a preset condition is met, controlling the active booster module to generate second brake fluid pressure in the brake wheel cylinder, where the second brake fluid pressure is less than the first brake fluid pressure. The preset condition includes at least one of the following: the driver has an acceleration intent, the driver has no acceleration intent and no braking intent and continuous triggering duration of the stability control function is greater than or equal to first duration, or the first electric braking parameter is less than or equal to a first threshold.

For example, when the driver has the acceleration intent, or the driver has no acceleration intent and no braking intent and the continuous triggering duration of the stability control function is greater than or equal to the first duration, or the first electric braking parameter is less than or equal to the first threshold, the active booster function may be exited, and correspondingly, the brake fluid pressure in the brake wheel cylinder is reduced.

In this application, when the preset condition is met, the active booster function may be exited, to avoid unexpected deceleration caused by active boosting.

In an embodiment, when the driver has the acceleration intent, or when the driver has no acceleration intent and no braking intent and continuous operating duration of the stability control function is greater than or equal to the first duration, basic brake fluid pressure in the brake wheel cylinder may be determined as the second brake fluid pressure.

In another embodiment, when the driver has the braking intent and the first electric braking parameter is less than or equal to the first threshold, the second brake fluid pressure may be determined based on the braking intent.

With reference to the first aspect, in some implementations of the first aspect, the method may further include: executing the stability control function when the first brake fluid pressure is greater than or equal to a preset pressure value.

For example, when energy regeneration is exited because the stability control function is triggered, the corresponding brake fluid pressure may be generated in the brake wheel cylinder based on the target torque for energy regeneration. Because it takes specific time to generate pressure in a brake fluid line and the brake wheel cylinder, execution of the stability control function may be suspended, and the stability control function like ABS is executed only when brake fluid pressure in the brake fluid line and the brake wheel cylinder reaches a specific pressure value, so that a control effect of the stability control function on vehicle stability can be ensured.

In an embodiment, the preset pressure value may be determined based on an actual braking force requirement. For example, it is assumed that the brake fluid pressure in the brake wheel cylinder needs to reach a pressure value 1 to meet the wheel-end braking force, and the preset pressure value may be 80% or 90% of the pressure value 1, or may be another preset proportion. For another example, Preset pressure value=Pressure value 1-Preset deviation. For another example, it is assumed that the basic brake fluid pressure in the brake wheel cylinder is a pressure value 2. To meet a requirement of the wheel-end braking force, the brake fluid pressure in the brake wheel cylinder needs to reach the pressure value 1. Preset pressure value=(Pressure value 1-Pressure value 2)*Preset proportion+Pressure value 2.

In this application, the stability control function is executed when the pressure of the brake fluid in the brake wheel cylinder is greater than or equal to a preset value, so that the control effect of the stability control function on vehicle stability can be ensured.

With reference to the first aspect, in some implementations of the first aspect, the stability control function includes at least one of an antilock brake system ABS function, an electric brakeforce distribution EBD function, or an electronic stability control ESC function.

According to a second aspect, a control apparatus is provided, including: an obtaining unit, configured to obtain a first electric braking parameter, where the first electric braking parameter is determined based on a traveling status of a vehicle, the vehicle includes an electric brake mechanism and a hydraulic brake mechanism, the hydraulic brake mechanism includes an active booster module and a brake wheel cylinder, the active booster module is configured to control pressure of brake fluid in the brake wheel cylinder, and when the vehicle is in an energy regeneration state, a braking force for the vehicle is provided by the electric brake mechanism based on the first electric braking parameter; and a control unit, configured to: when a stability control function is triggered, control, based on the first electric braking parameter, the active booster module to generate first brake fluid pressure in the brake wheel cylinder.

With reference to the second aspect, in some implementations of the second aspect, the control unit may be configured to: determine a first hydraulic braking force based on the first electric braking parameter; determine a wheel-end braking force based on the first hydraulic braking force; and control, based on the wheel-end braking force, the active booster module to generate the first brake fluid pressure in the brake wheel cylinder.

With reference to the second aspect, in some implementations of the second aspect, the control unit may be configured to determine the first hydraulic braking force based on the first electric braking parameter when determining that a driver has no braking intent and no acceleration intent.

With reference to the second aspect, in some implementations of the second aspect, the control unit may be configured to determine the first hydraulic braking force based on a braking intent of the driver and the first electric braking parameter.

With reference to the second aspect, in some implementations of the second aspect, the vehicle may include an active safety function, and the obtaining unit may be further configured to obtain a second hydraulic braking force. The second hydraulic braking force includes a braking force that needs to be provided by the hydraulic brake mechanism to the vehicle when the active safety function is triggered. The control unit is configured to: when the active safety function is triggered, determine the first hydraulic braking force based on the first electric braking parameter and the second hydraulic braking force.

With reference to the second aspect, in some implementations of the second aspect, the control unit may be further configured to: when a preset condition is met, control the hydraulic brake mechanism to generate second brake fluid pressure in the brake wheel cylinder, where the second brake fluid pressure is less than the first brake fluid pressure. The preset condition may include at least one of the following: the driver has an acceleration intent, the driver has no acceleration intent and no braking intent and continuous triggering duration of the stability control function is greater than or equal to first duration, or the first electric braking parameter is less than or equal to a first threshold.

With reference to the second aspect, in some implementations of the second aspect, the control unit may be further configured to: when the driver has the acceleration intent, or when the driver has no acceleration intent and no braking intent and the continuous triggering duration of the stability control function is greater than or equal to the first duration, determine basic brake fluid pressure in the brake wheel cylinder as the second brake fluid pressure; or when the driver has the braking intent and the first electric braking parameter is less than or equal to the first threshold, determine the second brake fluid pressure based on the braking intent.

With reference to the second aspect, in some implementations of the second aspect, the control unit may be further configured to execute the stability control function when the first brake fluid pressure is greater than or equal to a preset pressure value.

With reference to the second aspect, in some implementations of the second aspect, the stability control function may include at least one of an ABS, EBD, or ESC.

According to a third aspect, a control apparatus is provided. The apparatus includes: a memory, configured to store a computer program; and a processor, configured to execute the computer program stored in the memory, to enable the apparatus to perform the method according to any one of the first aspect and the possible implementations of the first aspect.

According to a fourth aspect, a control system is provided. The control system includes the apparatus according to any one of the second aspect, the third aspect, or the possible implementations of the second aspect and the third aspect.

According to a fifth aspect, a computer program product is provided. The computer program product includes computer program code. When the computer program code is run on a computer, the computer is enabled to perform the method according to any one of the first aspect and the possible implementations of the first aspect.

According to a sixth aspect, a computer-readable storage medium is provided. The computer-readable medium stores a computer program. When the computer program is run on a computer, the computer is enabled to perform the method according to any one of the first aspect and the possible implementations of the first aspect.

According to a seventh aspect, a chip is provided. The chip includes a circuit, configured to perform the method according to any one of the first aspect and the possible implementations of the first aspect.

According to an eighth aspect, a vehicle is provided. The vehicle includes the apparatus according to any one of the second aspect, the third aspect, or the possible implementations of the second aspect and the third aspect, or includes the system according to any one of the fourth aspect and the possible implementations of the fourth aspect.

### BRIEF DESCRIPTION OF DRAWINGS

FIG. 1 is a functional block diagram of a vehicle according to an embodiment of this application;
FIG. 2 is a diagram of a brake system and a drive system of a vehicle according to an embodiment of this application;
FIG. 3 is a diagram of a system architecture according to an embodiment of this application;
FIG. 4 is a schematic flowchart of a control method according to an embodiment of this application;
FIG. 5 is a schematic flowchart of a control method according to an embodiment of this application;
FIG. 6 is a diagram of a vehicle braking scenario according to an embodiment of this application;
FIG. 7 is a diagram of another vehicle braking scenario according to an embodiment of this application;
FIG. 8 is a diagram of another vehicle braking scenario according to an embodiment of this application;
FIG. 9 is a diagram of a braking force distribution scenario according to an embodiment of this application;
FIG. 10 is a diagram of another vehicle braking scenario according to an embodiment of this application;
FIG. 11 is a diagram of another vehicle braking scenario according to an embodiment of this application;
FIG. 12 is a diagram of another vehicle braking scenario according to an embodiment of this application;
FIG. 13 is a diagram of another system architecture according to an embodiment of this application;
FIG. 14 is a diagram of another system architecture according to an embodiment of this application;
FIG. 15 is a diagram of another system architecture according to an embodiment of this application;
FIG. 16 is a block diagram of a control apparatus according to an embodiment of this application; and
FIG. 17 is a block diagram of another control apparatus according to an embodiment of this application.

### DESCRIPTION OF EMBODIMENTS

The following describes technical solutions of this application with reference to accompanying drawings.

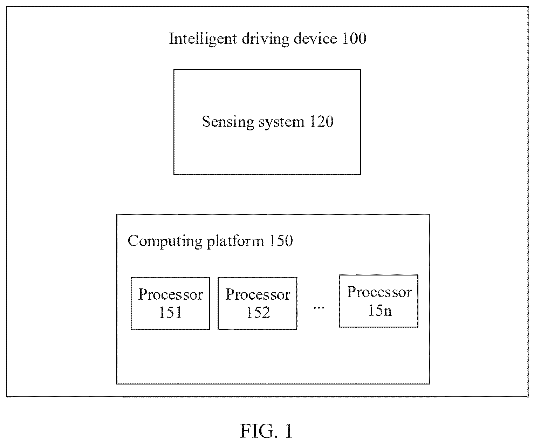

FIG. 1 is a functional block diagram of a vehicle 100 according to an embodiment of this application. The vehicle 100 may include a sensing system 120 and a computing platform 150. The sensing system 120 may include one or more sensors that sense information about an ambient environment of the vehicle 100. For example, the sensing system 120 may include a positioning system. The positioning system may be a global positioning system (global positioning system, GPS), a BeiDou system, or another positioning system. The sensing system 120 may alternatively include one or more of an inertial measurement unit (inertial measurement unit, IMU), a lidar, a millimeter-wave radar, an ultrasonic radar, and a camera apparatus.

A part of or all functions of the vehicle 100 may be controlled by the computing platform 150. The computing platform 150 may include one or more processors, such as processors 151 to 15n (n is a positive integer). The processor is a circuit having a signal processing capability. In an implementation, the processor may be a circuit having instruction reading and running capabilities, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of a part or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. A part or all of the processors 151 to 15n may invoke the instructions in the memory, to implement a corresponding function.

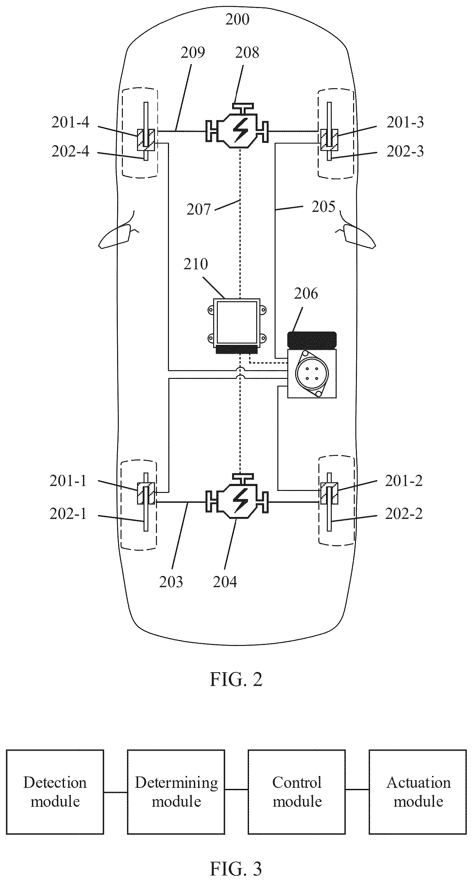

For example, FIG. 2 is a diagram of a brake system and a drive system of a vehicle according to an embodiment of this application. The vehicle 200 may be the vehicle 100 shown in FIG. 1. The vehicle 200 includes a brake system and a drive system. The brake system may include brake calipers (201-1, 201-2, 201-3, and 201-4), brake friction discs (202-1, 202-2, 202-3, and 202-4), brake wheel cylinders, a brake fluid line 205, a brake assistance apparatus 206, and a brake pedal. The drive system may include a front drive motor 208 and a front drive shaft 209, and/or a rear drive motor 204 and a rear drive shaft 203. The vehicle 200 further includes a vehicle control unit 210 and a communication circuit 207. The vehicle control unit 210 may be understood as the computing platform 150.

For example, the brake assistance apparatus 206 may be an integrated brake booster, and may include an electronic control unit, a pedal travel sensor, a brake master cylinder, a booster module (for example, a motor), a push rod mechanism, and the like. The brake pedal is rigidly connected to the integrated brake booster. In a drive-by-wire mode, when a driver steps on the brake pedal, the brake pedal drives the push rod mechanism to generate displacement. Stoke information of the brake pedal can be learned by obtaining the displacement of the push rod mechanism through the pedal travel sensor. The electronic control unit determines assistance that needs to be provided by the booster module to implement a braking intent of the driver, and applies, to the brake master cylinder, the assistance and a pushing force that is generated by the brake pedal through the push rod mechanism. Brake fluid in the brake master cylinder is pressed into the brake fluid line 205 and flows to the brake wheel cylinder. Pressure of brake fluid in the brake wheel cylinder increases, so that the brake calipers (201-1, 201-2, 201-3, and 201-4) are pushed to be in contact with the corresponding brake friction discs (202-1, 202-2, 202-3, and 202-4), to brake each wheel. The brake system may further include a fluid inlet valve and a fluid outlet valve, which are configured to adjust pressure of brake fluid in a single brake wheel cylinder, and may be configured to adjust a braking force applied to a single wheel. The fluid inlet valve and the fluid outlet valve may be solenoid valves. The brake fluid line 205 may be disposed in an H shape or an X shape. This is not limited in embodiments of this application. The brake system implements braking of the vehicle in a hydraulic manner, and may also be referred to as a hydraulic brake system or a hydraulic brake mechanism.

For example, the front drive motor 208 may provide a driving force for front wheels of the vehicle through the front drive shaft 209, and the rear drive motor 204 may provide a driving force for rear wheels of the vehicle through the rear drive shaft 203. As a core of the drive system, the vehicle control unit 210 may communicate with the front drive motor 208 and the rear drive motor 204 through a communication circuit like a CAN, and control the drive motors (204 and 208) to actuate. When the driver steps on an accelerator pedal, a target output torque of a drive motor is calculated based on an opening degree of the accelerator pedal, and the drive motor is controlled to actuate through the communication circuit 207, to provide a driving force for each wheel.

When an energy regeneration function is used, the driver releases the accelerator pedal, or the accelerator pedal is released to a specific extent in a single-pedal mode. The vehicle control unit 210 calculates a torque for energy regeneration based on a vehicle speed, and controls the drive motor to output a negative torque to provide a braking force for a corresponding wheel.

As described above, when the energy regeneration function is used, if a road adhesion coefficient of the vehicle suddenly decreases, the braking force on the wheel cannot be resisted due to a sudden drop in adhesion on a road. As a result, the wheel tends to be locked, a stability control function like an ABS is triggered, and the energy regeneration function is exited. When a wheel speed is gradually restored, the stability control function is exited, and when the energy regeneration function is exited, the braking force on the wheel suddenly decreases due to the stability control function. In this case, sudden forward lurching of the vehicle may be caused, and even vehicle instability may be caused to affect driving safety.

In view of this, embodiments of this application provide a control method and a control apparatus, to coordinate the energy regeneration function and the stability control function like the ABS, avoid unexpected acceleration of the vehicle caused by exit of the energy regeneration function, and ensure driving safety of the vehicle.

For example, FIG. 3 is a diagram of a system architecture according to an embodiment of this application. The system 300 may include a detection module, a determining module, a control module, and an actuation module.

The actuation module may include an electric brake mechanism and a hydraulic brake mechanism. For example, the electric brake mechanism may include an energy conversion apparatus, and the energy conversion apparatus may be connected to an energy storage apparatus. The energy conversion apparatus may convert kinetic energy of a vehicle into electric energy, and the energy storage apparatus can store the electric energy and provide the electric energy for the vehicle for use. For another example, the hydraulic brake mechanism may include an active booster module, and may control, based on a brake requirement of a driver, the active booster module to generate corresponding brake fluid pressure in a brake fluid line, to provide brake assistance for the driver. For another example, when an active safety function is triggered, the active booster module can be controlled to increase the pressure of the brake fluid in the brake fluid line without intervention of the driver, to provide a braking force for the vehicle.

In an embodiment, the energy conversion apparatus may have a plurality of operating modes, for example, a drive mode or a brake mode. In the drive mode, the energy conversion apparatus can provide a driving force for the vehicle. In the brake mode, the energy conversion apparatus can provide a braking force for the vehicle. The vehicle 200 shown in FIG. 2 is used as an example. When the vehicle uses the energy regeneration function, the drive motors (204 and 208) provide negative torques for the wheels, to convert kinetic energy of the vehicle into electric energy. In other words, the drive motors (204 and 208) may be understood as the energy conversion apparatus in the electric brake mechanism.

In another embodiment, the vehicle 200 shown in FIG. 2 is used as an example. The hydraulic brake mechanism may include the brake calipers (201-1, 201-2, 201-3, and 201-4), the brake friction discs (202-1, 202-2, 202-3, and 202-4), the brake wheel cylinders, the brake fluid line 205, the integrated brake booster, and the like. The booster module in the integrated brake booster may be understood as the active booster module in the hydraulic brake mechanism.

The detection module may be configured to obtain vehicle motion information. For example, the detection module may include a vehicle status sensor like a wheel speed detector or an inertial measurement unit (inertial measurement unit, IMU), and may be configured to obtain vehicle motion information such as a wheel speed, a yawing angular velocity, or a deceleration of the vehicle.

The determining module may be configured to determine, based on the vehicle motion information, whether the vehicle is in a stable state. For example, a slip rate of a wheel may be determined based on the vehicle motion information, to determine whether the vehicle is in the stable state.

In an embodiment, it is assumed that vehicle loads are located on a front-wheel side of the vehicle during traveling. When a rear wheel of the vehicle is locked, an EBD function may be first triggered to distribute the braking force. When the slip rate of the wheel is still high, an ABS function may be triggered. If the driver operates a steering wheel, an ESC function may be further triggered. The determining module may determine, based on the vehicle motion information, a specific stability control function triggered in each scenario.

The control module may be configured to control the actuation module to actuate. For example, the control module may control the electric brake mechanism to brake the vehicle in an energy regeneration manner. For another example, the control module may control the hydraulic brake mechanism to actuate to provide the braking force for the wheel. The control module may include one or more processing apparatuses such as a chip or a processor. For example, the control module may be located on the computing platform 150. For another example, the determining module and the control module may be integrated into a same controller.

In an embodiment, for example, the stability control function is ABS. Correspondingly, the control module may include an energy regeneration control module, an active booster control module, and an antilock control module. The energy regeneration control module may be configured to control the electric brake mechanism to control braking of the vehicle in an energy regeneration manner. The active booster control module may be configured to control the active booster module to actuate, to adjust pressure of brake fluid in the brake fluid line. The antilock control module may be configured to control a solenoid valve in the hydraulic brake mechanism to actuate, to avoid a wheel lockup and implement the ABS function. The vehicle 200 is used as an example. When one or more wheels of the vehicle are locked, the antilock control module may adjust an open/closed state of a fluid inlet valve and/or a fluid outlet valve of a brake wheel cylinder to adjust pressure of brake fluid in the brake wheel cylinder of the locked wheel, to avoid the wheel lockup. Based on the stability control function that can be implemented by the vehicle, the control module may alternatively include more or fewer modules. This is not limited in embodiments of this application.

For example, the energy regeneration control module, the active booster control module, and the antilock control module may be disposed in different processing apparatuses.

In an embodiment, a vehicle control unit (vehicle control unit, VCU) may include the energy regeneration control module, and may determine, based on vehicle status information, whether energy regeneration can be performed and a target torque for energy regeneration. For example, the VCU may determine, based on information such as opening degree information of an accelerator pedal, opening degree information of a brake pedal, a state of charge (SOC), a temperature, a vehicle speed, and an ABS trigger flag bit, whether energy regeneration can be performed and the target torque for energy regeneration. When the vehicle is in an energy regeneration state, the target torque for energy regeneration may be understood as a target braking torque of the electric brake mechanism.

In another embodiment, an intelligent brake system (integrated brake system, IBS) or a control unit of the IBS may include the active booster control module and the antilock control module. The intelligent brake system may determine, based on vehicle stability information, whether to trigger the ABS function, and may send an ABS trigger indication to the vehicle control unit when triggering the ABS function. The active booster control module may determine target brake pressure of the brake fluid in the brake fluid line when the target torque for energy regeneration is not zero and the ABS function is triggered. The hydraulic brake mechanism actively generates pressure and cooperates with the ABS to control a slip rate of a single wheel, to maintain deceleration continuity of the vehicle and avoid unexpected acceleration of the vehicle.

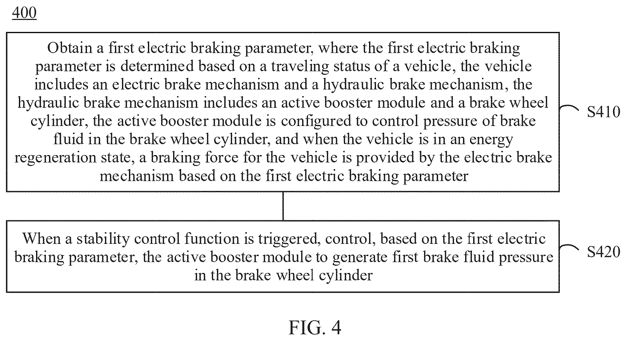

For example, FIG. 4 is a schematic flowchart of a control method according to an embodiment of this application. The method may be performed by a computing platform 150, or may be performed by a processor or a chip on the computing platform 150. For example, the method may be performed by an IBS, or may be performed by a control unit or a controller of the IBS, or may be performed by one or more processors in the controller of the IBS. For another example, the method may be performed by an active booster control module, an apparatus in which the active booster control module is located, or a processor or a chip in the active booster control module. The method 400 may include the following steps.

S410: Obtain a first electric braking parameter, where the first electric braking parameter is determined based on a traveling status of a vehicle, the vehicle includes an electric brake mechanism and a hydraulic brake mechanism, the hydraulic brake mechanism includes an active booster module and a brake wheel cylinder, the active booster module is configured to control pressure of brake fluid in the brake wheel cylinder, and when the vehicle is in an energy regeneration state, a braking force for the vehicle is provided by the electric brake mechanism based on the first electric braking parameter.

For example, the first electric braking parameter may be a target torque (denoted as a first electric braking torque) for electric braking, or may be a target braking force (denoted as a first electric braking force) for electric braking. In other words, the first electric braking parameter may be represented in a form of target torque or target braking force.

For example, the first electric braking torque may be calculated based on the traveling status like a vehicle speed and an opening degree of a pedal of the vehicle.

In an embodiment, when the vehicle is in the energy regeneration state, a target torque for energy regeneration may be determined based on opening degree information of an accelerator pedal, and the electric brake mechanism may be controlled based on the target torque for energy regeneration to provide the braking force for the vehicle.

In another embodiment, when the vehicle exits an energy regeneration function, the target torque for energy regeneration may still be calculated based on the traveling status like the vehicle speed and the opening degree of the pedal. For example, when the vehicle is in the energy regeneration state, the energy regeneration function is exited when a stability control function like an ABS is triggered. Therefore, to avoid a large fluctuation of a deceleration of the vehicle, when energy regeneration is exited because the ABS is triggered, an energy regeneration control module may still calculate the target torque for energy regeneration based on the opening degree of the pedal. Because the energy regeneration function has been exited, the energy regeneration control module may not send the target torque for energy regeneration to the electric brake mechanism. Alternatively, although the energy regeneration control module still sends the target torque for energy regeneration to the electric brake mechanism, the electric brake mechanism may ignore the target torque for energy regeneration.

In other words, whether the energy regeneration function is exited does not affect calculation of the target torque for energy regeneration by the energy regeneration control module. That the energy regeneration function is exited is reflected in that the electric brake mechanism does not apply the braking force to the vehicle based on the target torque for energy regeneration. For example, after the energy regeneration function is exited, an actuation torque for energy regeneration is zero, and the target torque for energy regeneration is determined based on the traveling status of the vehicle. The target torque for energy regeneration may be understood as the first electric braking torque.

S420: When the stability control function is triggered, control, based on the first electric braking parameter, the active booster module to generate first brake fluid pressure in the brake wheel cylinder.

In an embodiment, an example in which the triggered stability control function is the ABS is used. It is assumed that an active booster control module and an antilock control module are integrated into the controller of the IBS, and a VCU includes the energy regeneration control module.

For example, when an ABS function is triggered, the antilock control module may send indication information to the active booster control module through an internal circuit of the controller of the IBS, to indicate that the IBS is to trigger the ABS function. The active booster control module may control, based on the indication information, the active booster module to generate pressure in the brake fluid line. For another example, the controller of the IBS may send ABS trigger indication information to the VCU through a communication circuit of the vehicle. Correspondingly, the energy regeneration module may exit the energy regeneration function based on the ABS trigger indication information. The VCU may indicate the target torque for energy regeneration to the controller of the IBS through the communication circuit of the vehicle. For another example, the ABS trigger indication information may be an ABS flag bit.

In an embodiment, when the vehicle is in the energy regeneration state, the braking force is applied to the vehicle based on the first electric braking torque by the electric brake mechanism.

In another embodiment, when the vehicle is in the energy regeneration state, and the energy regeneration function is exited because the stability control function of the vehicle is triggered, the active booster module is controlled, based on the first electric braking torque, to generate the first brake fluid pressure in the brake wheel cylinder. For example, when the vehicle is in the energy regeneration state and the stability control function is triggered, the energy regeneration function is exited, but the energy regeneration control module may still calculate the target torque for energy regeneration. The active booster module may suspend intervention of the stability control function, determine a corresponding hydraulic braking force based on the target torque for energy regeneration, quickly generate pressure in a hydraulic brake system, and adjust a braking force at each wheel based on vehicle stability information after the pressure is generated in the hydraulic brake system, to implement vehicle stability control.

In still another embodiment, after the energy regeneration state is exited, the first electric braking torque changes with the traveling status of the vehicle, and the pressure of the brake fluid in the brake wheel cylinder may be adjusted based on the first electric braking torque.

Energy regeneration is exited when the stability control function is triggered, and the braking force applied to the vehicle by the electric brake mechanism vanishes when the energy regeneration state is exited. In this embodiment of this application, the target torque for energy regeneration is determined based on the traveling status of the vehicle, and does not change with the exit of the energy regeneration function. When the vehicle exits the energy regeneration state because the stability control function is triggered, the active booster module can apply a corresponding braking force to the vehicle by using an active booster function. This is equivalent to implementing switching from the electric brake system to the hydraulic brake system, and helps maintain deceleration consistency of the vehicle, to avoid unexpected acceleration of the vehicle caused by exit of the energy regeneration function, and ensure driving safety of the vehicle.

For example, a first hydraulic braking force may be determined based on the first electric braking parameter, a wheel-end braking force is distributed based on the first hydraulic braking force, and the first brake fluid pressure is generated in the brake wheel cylinder. The first hydraulic braking force may include a target braking force that is expected to be applied to the vehicle by the hydraulic brake mechanism when the active booster function is enabled.

For example, when a driver has no braking intent and no acceleration intent, the first hydraulic braking force may be determined based on the first electric braking torque.

In an embodiment, it is assumed that the vehicle is provided with only a front drive motor. Correspondingly, front wheels of the vehicle are drive wheels, and rear wheels of the vehicle are non-drive wheels. When the vehicle is in the energy regeneration state, a negative torque is applied to the front wheels of the vehicle by using the front drive motor. When the vehicle is in the energy regeneration state, target braking forces applied to the driven wheels may be determined based on the first electric braking torque, and a sum of the target braking forces applied to the driven wheels may be used as a target braking force for energy regeneration. When the vehicle is in the energy regeneration state, the target braking force for energy regeneration may be a target braking force for the entire vehicle. When the energy regeneration state is exited because the stability control function is triggered, this manner may still be used to calculate the target braking force for energy regeneration. When the driver has no acceleration intent and no braking intent, the target braking force for the entire vehicle may be the target braking force for energy regeneration. A difference from being in the energy regeneration state lies in that braking of the vehicle is implemented by using the hydraulic brake mechanism instead of the electric brake mechanism. Correspondingly, the braking force is applied to a brake wheel of the vehicle instead of the drive wheel of the vehicle. For example, it is assumed that brake wheel cylinders are disposed on both the front wheels and the rear end of the vehicle. The target braking force for the entire vehicle may be distributed to the front wheels and the rear wheels of the vehicle, and corresponding brake fluid pressure may be generated in the respective brake wheel cylinders.

For example, when the driver has a braking intent, the first hydraulic braking force may be determined based on the braking intent of the driver and the first electric braking parameter.

For example, in an actual scenario, an active safety function like AEB or CTB may be triggered during traveling of the vehicle. During intervention of the active safety function, the active booster module may actuate to increase the pressure of the brake fluid in the brake fluid line, to compensate a braking force for the vehicle.

In an embodiment, when the active safety function is triggered, the first hydraulic braking force may be determined based on the first electric braking parameter and a second hydraulic braking force. The second hydraulic braking force includes a braking force that needs to be provided by the hydraulic brake mechanism to the vehicle when the active safety function is triggered.

It is assumed that a target hydraulic braking force #1 is a target braking force for energy regeneration corresponding to the target torque for energy regeneration when the energy regeneration state is exited. When the driver has the braking intent or the active safety function has a brake requirement, the target braking force for the entire vehicle is adjusted based on the target hydraulic braking force #1. The target braking force for the entire vehicle is implemented by the hydraulic brake mechanism, and therefore may alternatively be referred to as a target hydraulic braking force for the entire vehicle.

In an embodiment, when the driver steps on a brake pedal, it may be considered that the target hydraulic braking force #1 cannot meet a brake requirement of the driver, and the target hydraulic braking force #1 needs to be compensated. The part that needs to be compensated may be obtained through calculation based on the opening degree of the pedal. For example, a braking force that the driver expects to compensate is denoted as a compensation braking force #2, and a sum of the hydraulic braking force #1 and the compensation braking force #2 may be determined as the target braking force for the entire vehicle. For another example, a total braking force (denoted as a target hydraulic braking force #3) that the driver expects to apply to the vehicle may be obtained based on the opening degree of the pedal. A larger value of the target hydraulic braking force #1 and the target hydraulic braking force #3 may be determined as the target braking force for the entire vehicle.

In another embodiment, when the active safety function has the brake requirement, it may be considered that the target hydraulic braking force #1 cannot meet an actual brake requirement of the vehicle, and the active safety function determines that the target hydraulic braking force #1 needs to be compensated to ensure driving safety of the vehicle. For example, the to-be-compensated braking force is denoted as a compensation braking force #4, and a sum of the target hydraulic braking force #1 and the compensation braking force #4 may be determined as the target braking force for the entire vehicle.

In some possible implementations, when a preset condition is met, the active booster function may be exited. Correspondingly, second brake fluid pressure is generated in the brake wheel cylinder, and the second brake fluid pressure is less than the first brake fluid pressure.

In an embodiment, when the driver has an acceleration intent, the active booster function may be exited. Correspondingly, the brake fluid pressure in the brake fluid line and/or the brake fluid pressure in the brake wheel cylinder may be reduced to basic brake fluid pressure.

In another embodiment, when the driver has no acceleration intent and no braking intent and continuous operating duration of the stability control function is greater than or equal to first duration, the active booster function may be exited. For example, when the vehicle travels from a high-adhesion road to a low-adhesion road, the ABS function may be continuously triggered. After the ABS function is continuously triggered for a period of time, the brake fluid pressure in the brake wheel cylinder may be controlled to decrease to the basic brake fluid pressure. For another example, the first duration may be 10 seconds (seconds, s) or 15s. The first duration may alternatively be another value, for example, 20s. This is not limited in embodiments of this application.

In still another embodiment, when the first electric braking torque is less than or equal to a first threshold, the active booster function may be exited. For example, after the vehicle exits the energy regeneration function, the vehicle speed continuously decreases under the action of the hydraulic brake mechanism. Correspondingly, a first braking torque changes as the vehicle speed decreases. When the first electric braking torque is less than or equal to the first threshold, the active booster function may be exited. For another example, the first threshold may be 20 newton (newton, N)·meters (meters, m), 10 N·m, or another value, for example, 0 N·m.

The following uses an example in which an ABS function is triggered during running of an energy regeneration function. Alternatively, another stability control function may be triggered. This is not limited in embodiments of this application.

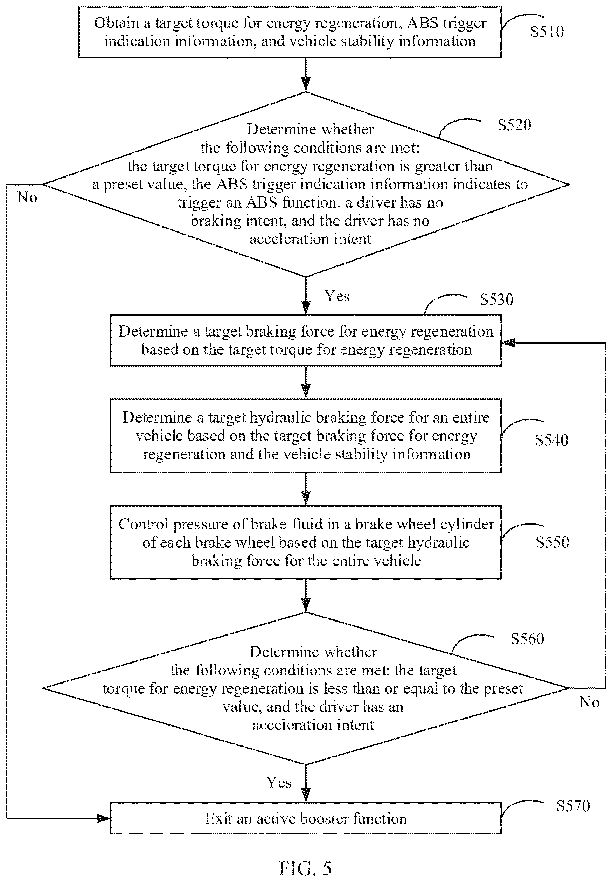

For example, FIG. 5 is a schematic flowchart of a control method according to an embodiment of this application. The method 500 may be understood as an extension or a variation of the method 400.

S510: Obtain a target torque for energy regeneration, ABS trigger indication information, and vehicle stability information.

For example, an energy regeneration control module may determine whether energy regeneration can be performed and the target torque for energy regeneration. An antilock control module may determine, based on the vehicle stability information, whether to trigger an ABS function, and may send an ABS flag bit to indicate whether to trigger the ABS function.

S520: Determine whether the following conditions are met: The target torque for energy regeneration is greater than a preset value, it is determined to trigger the ABS function, a driver has no braking intent, and the driver has no acceleration intent.

When the target torque for energy regeneration is greater than the preset value (for example, 0), it is determined to trigger the ABS function based on the ABS flag bit, the driver has no braking intent, and the driver has no acceleration intent, step S530 may be performed; otherwise, step S570 may be performed.

In an embodiment, when a vehicle is in a dual-pedal mode, if a pedal stroke of a brake pedal is less than a preset threshold, it may be considered that the driver has no braking intent; or if a pedal stroke of an accelerator pedal is less than a preset threshold, it may be considered that the driver has no acceleration intent.

In another embodiment, when the vehicle is in a single-pedal mode, whether the driver has a braking intent or an acceleration intent may be determined based on opening degree information of the accelerator pedal.

S530: Determine a target braking force for energy regeneration based on the target torque for energy regeneration.

The vehicle 200 shown in FIG. 2 is used as an example. In an energy regeneration state, the drive motors 204 and 208 provide negative torques for the front wheels and the rear wheels respectively, to perform energy regeneration. Braking forces for energy regeneration that are expected to be applied to drive wheels may be determined based on the target torque for energy regeneration, and a sum of the braking forces for energy regeneration that are expected to be applied to the drive wheels may be used as the target braking force for energy regeneration. When the ABS trigger flag information indicates to trigger the ABS, although the energy regeneration function is exited, the target torque for energy regeneration of the drive motors 204 and 208 may still be obtained, and the target braking force for energy regeneration may still be determined in the foregoing manner.

S540: Determine the target hydraulic braking force for the entire vehicle based on the target braking force for energy regeneration and the vehicle stability information.

For example, when the target torque for energy regeneration is greater than the preset value and the ABS flag bit indicates that the ABS function needs to be triggered, the energy regeneration function may be exited, an active booster function is triggered, and a hydraulic brake mechanism is used to provide a braking force for the vehicle.

In an embodiment, when the ABS function is triggered, an electric brake mechanism no longer provides a braking force for the vehicle, and generates corresponding brake fluid pressure in a brake fluid line based on the target torque for energy regeneration by using an active booster module. After the corresponding brake fluid pressure is generated in the hydraulic brake fluid line, the ABS function is implemented by controlling a fluid inlet valve and/or a fluid outlet valve of the brake wheel cylinder.

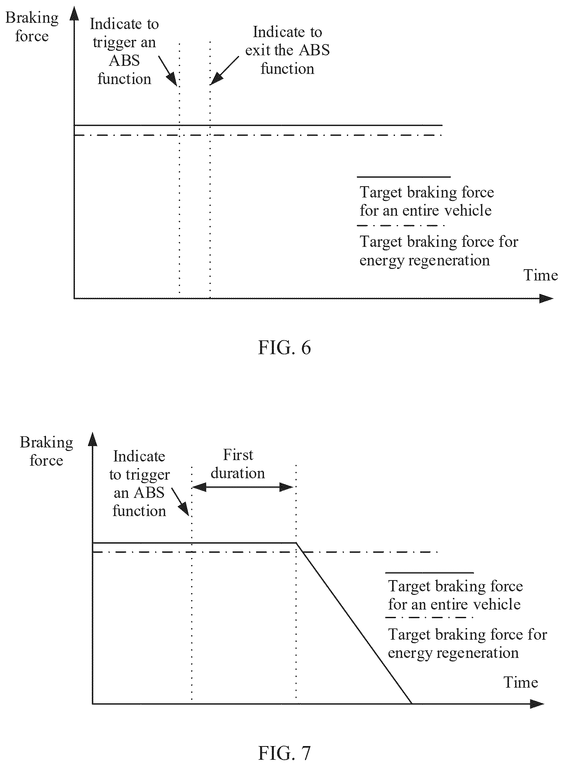

For example, FIG. 6 is a diagram of a vehicle braking scenario according to an embodiment of this application. It is assumed that a quantity of times of triggering an ABS is small and/or duration of triggering the ABS is short. For example, after a vehicle travels over a speed bump, a road adhesion coefficient is restored, and the ABS is no longer continuously triggered. In this case, as shown in FIG. 6, after intervention of an active booster function, the vehicle is stable, and a target braking force for energy regeneration may be used as a target hydraulic braking force for the entire vehicle.

For another example, FIG. 7 is a diagram of another vehicle braking scenario according to an embodiment of this application. In a scenario related to an ABS function, an ABS may be continuously triggered. For example, after a vehicle travels from a road with a high adhesion coefficient to a road with a low adhesion coefficient, the ABS function is continuously triggered. In this case, at an early stage of intervention of an active booster function, a target braking force for energy regeneration may be used as a target hydraulic braking force for the entire vehicle, and pressure is quickly generated by using a hydraulic brake mechanism. As shown in FIG. 7, after the active booster function intervenes for first duration (for example, 20s or 30s), stability of the vehicle may still be poor, and the ABS function needs to be continuously triggered. It is considered that a driver has no active braking intent and no acceleration intent. To avoid unexpected braking, the target hydraulic braking force for the entire vehicle may be gradually reduced until the active booster function is exited.

In an actual scenario, an active safety function that requires intervention of an active booster module may be further triggered. For example, when an obstacle suddenly appears in front of the vehicle, AEB may be triggered.

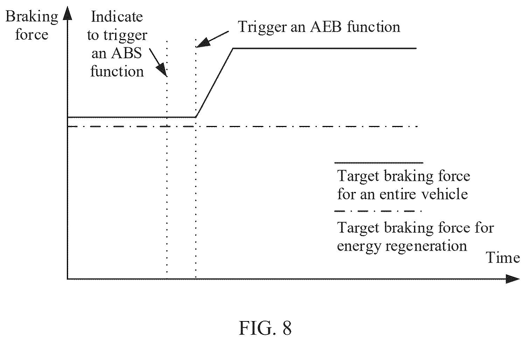

For example, arbitration may be performed on the target braking force for energy regeneration and another target braking force that triggers the active booster module. For example, a larger value of the target braking force for energy regeneration and a target braking force required by the AEB may be used as a target braking force for the entire vehicle, and braking of the vehicle is controlled by using the hydraulic brake mechanism. For example, FIG. 8 is a diagram of another vehicle braking scenario according to an embodiment of this application. As shown in FIG. 8, at an early stage of intervention of an active booster function, a target braking force for energy regeneration may be used as a target hydraulic braking force for an entire vehicle, and pressure is quickly generated by using a hydraulic brake mechanism. When an active safety function like AEB is triggered, a larger value of a target braking force required to be applied to the vehicle by the function and the target braking force for energy regeneration may be used as a target braking force for the entire vehicle.

S550: Control pressure of brake fluid in a brake wheel cylinder of each brake wheel based on the target hydraulic braking force for the entire vehicle.

The pressure of the brake fluid in the brake wheel cylinder of each brake wheel is controlled, so that the target hydraulic braking force for the entire vehicle may be distributed to each brake wheel.

For example, the target hydraulic braking force for the entire vehicle may be distributed based on a quantity of locked wheels.

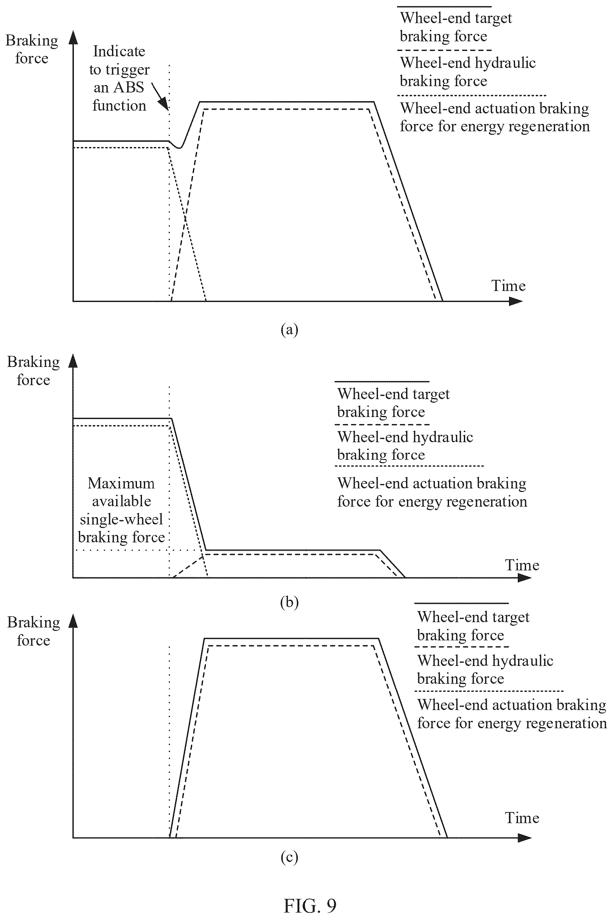

In an embodiment, the vehicle 200 is used as an example. It is assumed that the right front wheel of the vehicle 200 is locked. Correspondingly, an ABS control module may calculate a maximum available single-wheel braking force. The target hydraulic braking force for the entire vehicle may be subtracted by the maximum available single-wheel braking force, and then an obtained difference is distributed to the left front wheel and the rear wheels that are not locked, to control pressure of brake fluid in each brake wheel cylinder. The following provides descriptions with reference to FIG. 9.

For example, FIG. 9 is a diagram of a braking force distribution scenario according to an embodiment of this application. For a locked wheel, when an active booster function intervenes, a hydraulic braking force may be distributed to the locked wheel based on a maximum available single-wheel braking force. The maximum available single-wheel braking force is less than an electric braking force in an energy regeneration state. This helps alleviate a wheel lockup after the active booster function intervenes. In addition, a difference obtained by subtracting the maximum available single-wheel braking force from a target hydraulic braking force for an entire vehicle is distributed to a plurality of non-locked wheels.

As shown in (a) in FIG. 9, for a non-locked drive wheel, when a hydraulic brake mechanism is switched to provide a braking force for the wheel, the braking force distributed to the wheel may be greater than a braking force distributed to the wheel in the energy regeneration state.

As shown in (b) in FIG. 9, in comparison with a case in which the active booster function does not intervene, the braking force distributed to the locked wheel is reduced.

In some possible cases, a quantity of drive wheels of the vehicle is less than a quantity of brake wheels. When the active booster function intervenes, a braking force may be applied to a non-drive wheel, as shown in (c) in FIG. 9.

In another embodiment, when a quantity of locked wheels is greater than or equal to 2, it may be considered that the vehicle is entirely on a road with a low adhesion coefficient, and the target hydraulic braking force for the entire vehicle may be distributed to each brake wheel of the vehicle based on a braking force distribution coefficient.

S560: Determine whether the following conditions are met: The target torque for energy regeneration is less than the preset value, the driver has a braking intent, and the driver has an acceleration intent.

When the target torque for energy regeneration is less than the preset value, and the driver has the braking intent or the acceleration intent, the active booster function may be exited, and step S570 is performed; otherwise, step S530 is performed.

S570: Exit the active booster function.

For example, the target torque for energy regeneration may be determined based on an opening degree of the accelerator pedal and a vehicle speed. For example, when the opening degree information of the accelerator pedal remains unchanged, the target torque for energy regeneration may decrease as the vehicle speed decreases. The following uses a scenario in which the ABS is triggered as an example for description.

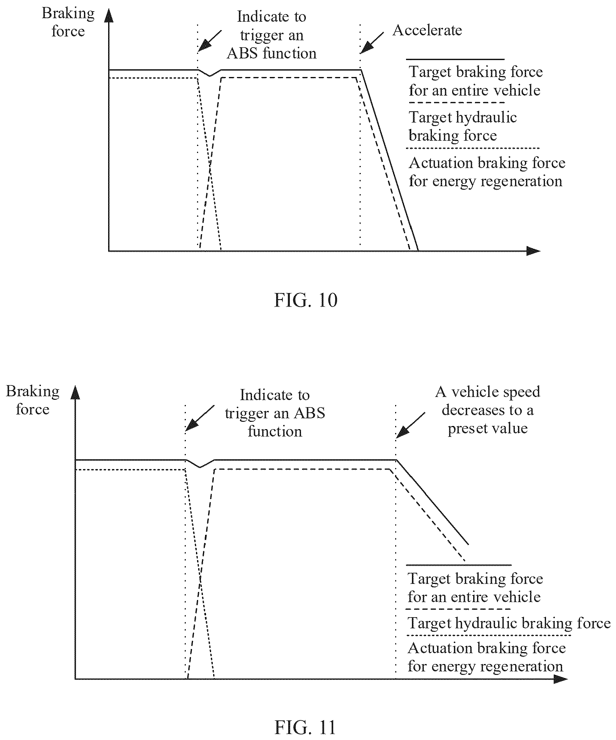

In an embodiment, when a driver has an acceleration intent, an active booster function is exited. Correspondingly, a hydraulic braking force for a vehicle may be exited in a preset manner. For example, FIG. 10 is a diagram of a braking scenario according to an embodiment of this application. As shown in FIG. 10, an active booster module may obtain a target braking torque for energy regeneration and ABS trigger flag information, enable an active booster function when determining that the ABS trigger flag information indicates to trigger an ABS, and quickly generate a hydraulic braking force based on the target braking torque for energy regeneration. After the hydraulic braking force is successfully generated, an antilock function is implemented by controlling pressure of brake fluid in a brake wheel cylinder. In this manner, a braking force for the entire vehicle does not fluctuate greatly before and after an energy regeneration function is exited. When a driver has an acceleration intent, the braking force for the entire vehicle is controlled to be gradually exited, to avoid sudden forward lurching of the vehicle.

In another embodiment, with intervention of an active booster function, a vehicle speed may continuously decrease. It is assumed that an opening degree of an accelerator pedal remains unchanged. Within some vehicle speed ranges, a target braking force for energy regeneration does not change with the decrease of the vehicle speed. When the vehicle speed is less than a preset value, the target braking force for energy regeneration decreases as the vehicle speed decreases. When the target braking force for energy regeneration is less than the preset value, the active booster function may be exited. For example, FIG. 11 is a diagram of another braking scenario according to an embodiment of this application. As shown in FIG. 11, an initial vehicle speed of a vehicle is high. Although the vehicle speed decreases with intervention of an active booster function, the vehicle speed is within a preset range, and a target braking force for energy regeneration does not change with the decrease of the vehicle speed. When the vehicle speed decreases to a preset value, the target braking force for energy regeneration decreases as the vehicle speed decreases. When the target braking force for energy regeneration decreases to the preset value, the active booster function is exited. Correspondingly, brake fluid pressure in a brake fluid line may be reduced to basic brake fluid pressure. Brake fluid pressure in a brake wheel cylinder may be reduced to the basic brake fluid pressure.

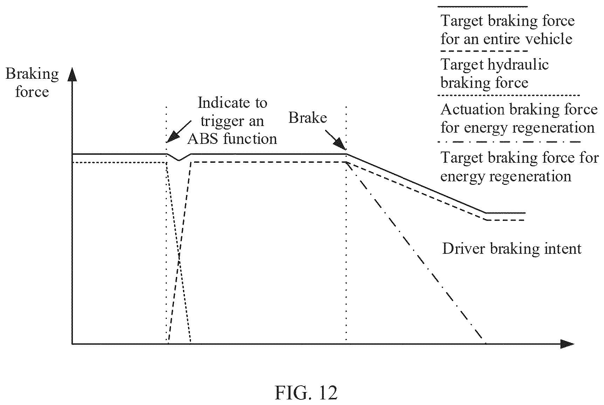

In still another embodiment, when a driver has an active braking intent, a hydraulic braking force for an entire vehicle is correspondingly determined based on the braking intent of the driver and a target torque for energy regeneration. For example, FIG. 12 is a diagram of another braking scenario according to an embodiment of this application. As shown in FIG. 12, after an active booster function intervenes, when a driver has an active braking intent, a braking force that the driver expects to apply to a vehicle (referred to as a driver expected braking force or a driver braking intent for short) may be determined based on pedal stroke information, and a hydraulic braking force for the entire vehicle may be determined based on the driver braking intent and a target braking force for energy regeneration. When the target braking force for energy regeneration decreases to 0 as a vehicle speed decreases, the active booster function is exited, and then the hydraulic braking force for the entire vehicle is determined based on the driver braking intent. In this manner, pedal sense consistency can be maintained when the active booster function intervenes and is exited, to improve operation experience of the driver.

In yet another embodiment, when continuous triggering duration of an ABS is greater than or equal to a preset value, an active booster function may also be exited.

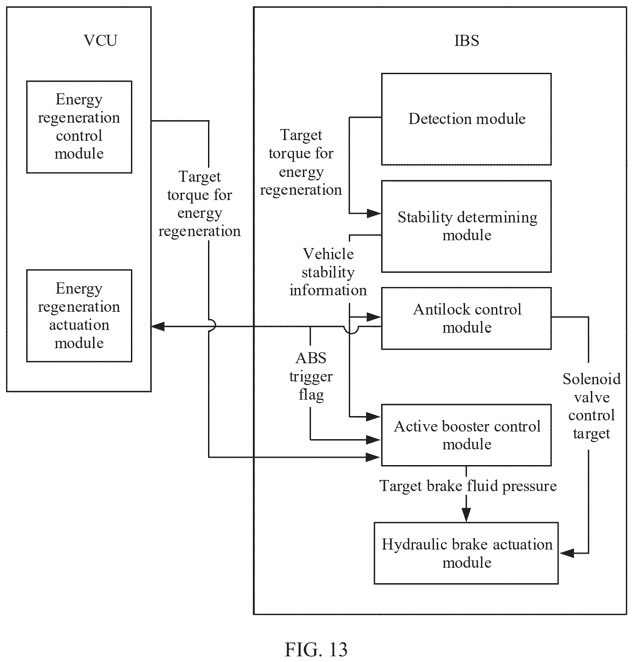

For example, FIG. 13 is a diagram of a system architecture according to an embodiment of this application. As shown in FIG. 13, a VCU may include an energy regeneration control module and an energy regeneration actuation module. An IBS may include a detection module, a determining module, an antilock control module, an active booster control module, and a hydraulic brake actuation module.

For example, the energy regeneration control module may determine, based on vehicle traveling status information such as opening degree information of an accelerator pedal, opening degree information of a brake pedal, a battery SOC, a battery temperature, a vehicle speed, and an ABS trigger flag, whether energy regeneration can be performed and a target torque for energy regeneration; may calculate an actuation torque for energy regeneration based on the target torque for energy regeneration and whether energy regeneration can be actuated, and send the actuation torque for energy regeneration to the energy regeneration actuation module; may send the target torque for energy regeneration to an IBS; and may indicate whether energy regeneration can be actuated by using an energy regeneration enabling flag bit.

For example, the antilock control module may receive vehicle stability information such as a slip rate of a wheel, to determine whether to trigger an ABS function; and send ABS trigger flag information to the VCU when determining to trigger the ABS function. When the target torque for energy regeneration is greater than 0 and the antilock control module indicates to trigger an ABS, the active booster control module may determine target pressure of brake fluid in a brake fluid line based on the target torque for energy regeneration and the vehicle stability information; control an active booster module to actively generate pressure; and cooperate with the ABS to control a slip rate of a single wheel, to maintain deceleration continuity of the vehicle and avoid unexpected acceleration and out-of-control of the vehicle.

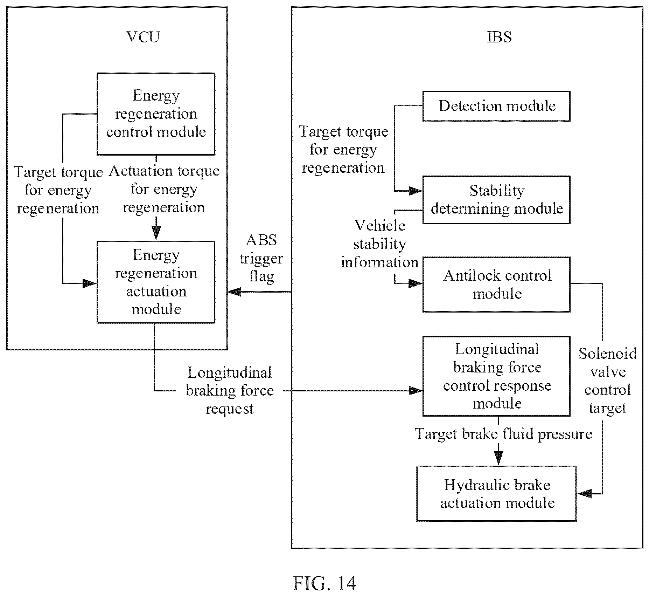

For example, FIG. 14 is a diagram of another system architecture according to an embodiment of this application. In comparison with the system architecture shown in FIG. 13, an active booster module may be further divided into a longitudinal braking force control module and a longitudinal braking force control response module.

An energy regeneration control module may send a target torque for energy regeneration and an energy regeneration enabling flag bit to the longitudinal braking force control module. When an energy regeneration actuation module cannot actuate the target torque for energy regeneration (for example, a vehicle has exited an energy regeneration state), the longitudinal braking force control module may determine a longitudinal target braking force based on the target torque for energy regeneration, and send request information to the longitudinal braking force control response module, to request an IBS to apply the longitudinal target braking force to the vehicle in a longitudinal direction. The longitudinal target braking force may correspond to the first electric braking force in the method S400.

The IBS may arbitrate a braking force for the entire vehicle based on the longitudinal target braking force and the request information sent by a VCU, and distribute a wheel-end braking force. Braking of the vehicle is controlled by controlling a hydraulic brake mechanism.

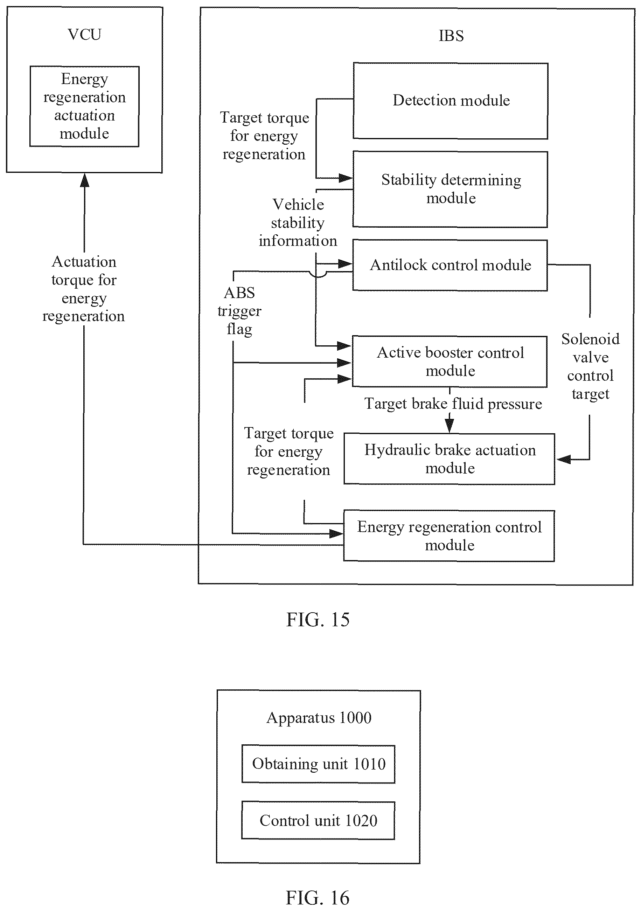

For example, FIG. 15 is a diagram of another system architecture according to an embodiment of this application. In comparison with the system architecture in FIG. 13, an energy regeneration control module may be disposed in an IBS. The IBS may send an energy regeneration enabling flag bit and an actuation torque for energy regeneration to a VCU. In an energy regeneration state, the VCU may send the actuation torque for energy regeneration and the energy regeneration enabling flag bit to a controller of a drive motor, to control the drive motor to perform energy regeneration.

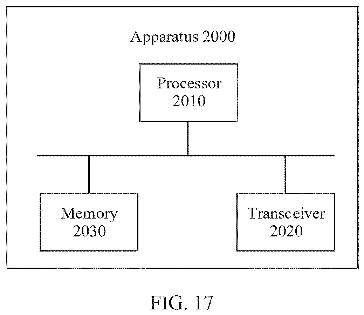

The foregoing describes in detail the methods provided in embodiments of this application with reference to FIG. 4 to FIG. 15. The following describes in detail the apparatuses provided in embodiments of this application with reference to FIG. 16 and FIG. 17. Descriptions of apparatus embodiments correspond to the descriptions of the method embodiments. Therefore, for content that is not described in detail, refer to the foregoing method embodiments.

For example, FIG. 16 is a block diagram of a control apparatus 1000 (referred to as an apparatus 1000 for short below) according to an embodiment of this application. The apparatus may include an obtaining unit 1010 and a control unit 1020.

The apparatus 1000 may include units for performing any method in FIG. 4 to FIG. 15, and the units in the apparatus 1000 may be configured to perform corresponding procedures in any method embodiment in FIG. 4 to FIG. 15.

When the apparatus 1000 is configured to perform the method 400 in FIG. 4, the obtaining unit 1010 may be configured to perform step S410 in the method 400, and the control unit 1020 may be configured to perform steps S420 and S430 in the method 400.

Specifically, the obtaining unit 1010 may be configured to: obtain a first electric braking parameter, where the first electric braking parameter is determined based on a traveling status of a vehicle, the vehicle includes an electric brake mechanism and a hydraulic brake mechanism, the hydraulic brake mechanism includes an active booster module and a brake wheel cylinder, the active booster module is configured to control pressure of brake fluid in the brake wheel cylinder, and when the vehicle is in an energy regeneration state, a braking force for the vehicle is provided by the electric brake mechanism based on the first electric braking parameter; and the control unit 1020 may be configured to: when a stability control function is triggered, control, based on the first electric braking parameter, the active booster module to generate first brake fluid pressure in the brake wheel cylinder.

In an embodiment, the apparatus 1000 may be disposed on a computing platform 150.

In another embodiment, the apparatus 1000 may be a controller of an IBS, or may be a processor or a chip in the controller of the IBS, or may be an apparatus including the controller of the IBS. For example, when the vehicle is in the energy regeneration state, a VCU may determine a target torque for energy regeneration based on the traveling status of the vehicle. When the vehicle exits the energy regeneration state because an ABS is triggered, the VCU may still determine the target torque for energy regeneration based on the traveling status of the vehicle. The IBS may obtain the target torque for energy regeneration from the VCU.

In some possible implementations, the control unit 1020 may be configured to: determine a first hydraulic braking force based on the first electric braking parameter; determine a wheel-end braking force based on the first hydraulic braking force; and control, based on the wheel-end braking force, the active booster module to generate the first brake fluid pressure in the brake wheel cylinder.

For example, the first hydraulic braking force may indicate a target braking force that is expected to be applied to the vehicle by the hydraulic brake mechanism when an active booster function is enabled. The active booster function may indicate that when a driver does not need to step on a brake pedal, pressure of brake fluid in a brake fluid line is increased by using the active booster module.

In some possible implementations, the control unit 1020 may be configured to determine the first hydraulic braking force based on the first electric braking parameter when determining that the driver has no braking intent and no acceleration intent.

In some possible implementations, the control unit 1020 may be configured to determine the first hydraulic braking force based on a braking intent of the driver and the first electric braking parameter.

In some possible implementations, the vehicle may include an active safety function (for example, AEB), and the obtaining unit 1010 may be further configured to obtain a second hydraulic braking force. The second hydraulic braking force includes a braking force that needs to be provided by the hydraulic brake mechanism to the vehicle when the active safety function is triggered. The control unit 1020 may be further configured to: when the active safety function is triggered, determine the first hydraulic braking force based on the first electric braking parameter and the second hydraulic braking force.

In an embodiment, when a processor of the active safety function is integrated into the apparatus 1000, obtaining the second hydraulic braking force may alternatively mean that the apparatus 1000 calculates the second hydraulic braking force based on a requirement of the active safety function.

In some possible implementations, the control unit 1020 may be further configured to: when a preset condition is met, control the hydraulic brake mechanism to generate second brake fluid pressure in the brake wheel cylinder, where the second brake fluid pressure is less than the first brake fluid pressure. The preset condition may include at least one of the following: the driver has an acceleration intent, the driver has no acceleration intent and no braking intent and continuous triggering duration of the stability control function is greater than or equal to first duration, or the first electric braking parameter is less than or equal to a first threshold.

In some possible implementations, the control unit 1020 may be further configured to: when the driver has the acceleration intent, or when the driver has no acceleration intent and no braking intent and the continuous triggering duration of the stability control function is greater than or equal to the first duration, determine basic brake fluid pressure in the brake wheel cylinder as the second brake fluid pressure; or when the driver has the braking intent and the first electric braking parameter is less than or equal to the first threshold, determine the second brake fluid pressure based on the braking intent.

In some possible implementations, the control unit may be further configured to execute the stability control function when the first brake fluid pressure is greater than or equal to a preset pressure value.

For example, when energy regeneration is exited because the stability control function is triggered, the corresponding brake fluid pressure may be generated in the brake wheel cylinder based on the target torque for energy regeneration. Because it takes specific time to generate pressure in a brake fluid line and the brake wheel cylinder, execution of the stability control function may be suspended, and the stability control function like ABS is executed only when brake fluid pressure in the brake fluid line and the brake wheel cylinder reaches a specific pressure value, so that a control effect of the stability control function on vehicle stability can be ensured.

In an embodiment, the preset pressure value may be determined based on an actual braking force requirement. For example, it is assumed that the brake fluid pressure in the brake wheel cylinder needs to reach a pressure value 1 to meet the wheel-end braking force, and the preset pressure value may be 80% or 90% of the pressure value 1, or may be another preset proportion. For another example, Preset pressure value=Pressure value 1-Preset deviation. For another example, it is assumed that the basic brake fluid pressure in the brake wheel cylinder is a pressure value 2. To meet a requirement of the wheel-end braking force, the brake fluid pressure in the brake wheel cylinder needs to reach the pressure value 1. Preset pressure value=(Pressure value 1-Pressure value 2)*Preset proportion+Pressure value 2.

Division of the units in the foregoing apparatus is merely logical function division. During actual implementation, all or a part of the units may be integrated into one physical entity, or may be physically separated. All units in the foregoing apparatus may be implemented in a form of software invoked by a processor; or all units may be implemented in a form of hardware circuit; or a part of units may be implemented in a form of software invoked by a processor, and a remaining part may be implemented in a form of hardware circuit.

During specific implementation, the obtaining unit 1010 may be implemented by at least one transceiver or a transceiver-related circuit, and the control unit 1020 may be implemented by at least one processor or a processor-related circuit. In an example, one or more processors may determine the first hydraulic braking force based on the first electric braking parameter. In another example, one or more processors may determine the wheel-end braking force based on the first hydraulic braking force, and control the active booster module to generate the first brake fluid pressure in the brake wheel cylinder.

For example, FIG. 17 is a block diagram of another control apparatus 2000 (referred to as an apparatus 2000 for short below) according to an embodiment of this application. The apparatus 2000 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, so that the interface circuit 2020 receives/sends a part of parameters. Optionally, the memory 2030 may be coupled to the processor 2010 through an interface, or may be integrated with the processor 2010.

It should be noted that the interface circuit 2020 may include but is not limited to a transceiver apparatus like an input/output interface (input/output interface), to implement communication between the apparatus 2000 and another device or a communication network. For example, a first electric braking parameter may be obtained through the interface circuit 2020. For another example, control information may be sent to a component corresponding to a hydraulic brake mechanism through the interface circuit 2020, to control brake fluid pressure in a brake wheel cylinder.

An embodiment of this application further provides a control system. The system includes the apparatus 1000 or the apparatus 2000.

An embodiment of this application further provides a computer program product. The computer program product includes computer program code. When the computer program code is run on a computer, the computer is enabled to perform any one of the method embodiments in FIG. 4 to FIG. 15 and possible implementations of the method embodiments.

An embodiment of this application further provides a computer-readable storage medium. The computer-readable storage medium stores program code or instructions. When the computer program code or the instructions are executed by a processor of a computer, the processor is enabled to implement any one of the method embodiments in FIG. 4 to FIG. 15 and possible implementations of the method embodiments.

An embodiment of this application further provides a chip, including a circuit, configured to perform any one of the method embodiments in FIG. 4 to FIG. 15 and possible implementations of the method embodiments.

An embodiment of this application further provides a vehicle. The vehicle includes the apparatus 1000 or the apparatus 2000.

The vehicle in this application is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. For example, the vehicle in this application may include a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), or the like.

Terms used in embodiments of this application are used only for the purpose of describing specific embodiments, but are not intended to limit this application. Terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining a first electric braking parameter, wherein the first electric braking parameter is determined based on a traveling status of a vehicle, the vehicle comprises an electric brake mechanism and a hydraulic brake mechanism, the hydraulic brake mechanism comprises an active booster module and a brake wheel cylinder, the active booster module is configured to control pressure of brake fluid in the brake wheel cylinder, and when the vehicle is in an energy regeneration state, a braking force for the vehicle is provided by the electric brake mechanism based on the first electric braking parameter; and
when a stability control function is triggered, controlling, based on the first electric braking parameter, the active booster module to generate first brake fluid pressure in the brake wheel cylinder.

2. The method according to claim 1, wherein controlling, based on the first electric braking parameter, the active booster module to generate the first brake fluid pressure in the brake wheel cylinder comprises:
determining a first hydraulic braking force based on the first electric braking parameter;
determining a wheel-end braking force based on the first hydraulic braking force; and
controlling, based on the wheel-end braking force, the active booster module to generate the first brake fluid pressure in the brake wheel cylinder.

3. The method according to claim 2, wherein determining the first hydraulic braking force based on the first electric braking parameter comprises:
determining the first hydraulic braking force based on the first electric braking parameter when determining that a driver has no braking intent and no acceleration intent.

4. The method according to claim 2, wherein determining the first hydraulic braking force based on the first electric braking parameter comprises:
determining the first hydraulic braking force based on a braking intent of a driver and the first electric braking parameter.

5. The method according to any one of claims 2 to 4, wherein the method further comprises:
obtaining a second hydraulic braking force, wherein the second hydraulic braking force comprises a braking force that needs to be provided by the hydraulic brake mechanism to the vehicle when an active safety function is triggered; and
determining the first hydraulic braking force based on the first electric braking parameter comprises:
when the active safety function is triggered, determining the first hydraulic braking force based on the first electric braking parameter and the second hydraulic braking force.

6. The method according to any one of claims 2 to 5, wherein the method further comprises:
when a preset condition is met, controlling the hydraulic brake mechanism to generate second brake fluid pressure in the brake wheel cylinder, wherein the second brake fluid pressure is less than the first brake fluid pressure, wherein
the preset condition comprises at least one of the following: the driver has an acceleration intent, the driver has no acceleration intent and no braking intent and continuous triggering duration of the stability control function is greater than or equal to first duration, or the first electric braking parameter is less than or equal to a first threshold.

7. The method according to claim 6, wherein the method further comprises:
when the driver has the acceleration intent, or when the driver has no acceleration intent and no braking intent and the continuous triggering duration of the stability control function is greater than or equal to the first duration, determining basic brake fluid pressure in the brake wheel cylinder as the second brake fluid pressure; or
when the driver has the braking intent and the first electric braking parameter is less than or equal to the first threshold, determining the second brake fluid pressure based on the braking intent.

8. The method according to any one of claims 1 to 7, wherein the method further comprises:
executing the stability control function when the first brake fluid pressure is greater than or equal to a preset pressure value.

9. The method according to any one of claims 1 to 8, wherein the stability control function comprises at least one of an antilock brake system ABS function, an electric brakeforce distribution EBD function, or an electronic stability control ESC function.

10. A control apparatus, comprising:
an obtaining unit, configured to obtain a first electric braking parameter, wherein the first electric braking parameter is determined based on a traveling status of a vehicle, the vehicle comprises an electric brake mechanism and a hydraulic brake mechanism, the hydraulic brake mechanism comprises an active booster module and a brake wheel cylinder, the active booster module is configured to control pressure of brake fluid in the brake wheel cylinder, and when the vehicle is in an energy regeneration state, a braking force for the vehicle is provided by the electric brake mechanism based on the first electric braking parameter; and
a control unit, configured to: when a stability control function is triggered, control, based on the first electric braking parameter, the active booster module to generate first brake fluid pressure in the brake wheel cylinder.

11. The apparatus according to claim 10, wherein the control unit is configured to:
determine a first hydraulic braking force based on the first electric braking parameter;
determine a wheel-end braking force based on the first hydraulic braking force; and
control, based on the wheel-end braking force, the active booster module to generate the first brake fluid pressure in the brake wheel cylinder.

12. The apparatus according to claim 11, wherein the control unit is configured to:
determine the first hydraulic braking force based on the first electric braking parameter when determining that a driver has no braking intent and no acceleration intent.

13. The apparatus according to claim 11, wherein the control unit is configured to:
determine the first hydraulic braking force based on a braking intent of a driver and the first electric braking parameter.

14. The apparatus according to any one of claims 11 to 13, wherein the vehicle comprises an active safety function, and the obtaining unit is further configured to:
obtain a second hydraulic braking force, wherein the second hydraulic braking force comprises a braking force that needs to be provided by the hydraulic brake mechanism to the vehicle when the active safety function is triggered; and
the control unit is configured to:
when the active safety function is triggered, determine the first hydraulic braking force based on the first electric braking parameter and the second hydraulic braking force.

15. The apparatus according to any one of claims 11 to 14, wherein the control unit is further configured to:
when a preset condition is met, control the hydraulic brake mechanism to generate second brake fluid pressure in the brake wheel cylinder, wherein the second brake fluid pressure is less than the first brake fluid pressure, wherein
the preset condition comprises at least one of the following: the driver has an acceleration intent, the driver has no acceleration intent and no braking intent and continuous triggering duration of the stability control function is greater than or equal to first duration, or the first electric braking parameter is less than or equal to a first threshold.

16. The apparatus according to claim 15, wherein the control unit is further configured to:
when the driver has the acceleration intent, or when the driver has no acceleration intent and no braking intent and the continuous triggering duration of the stability control function is greater than or equal to the first duration, determine basic brake fluid pressure in the brake wheel cylinder as the second brake fluid pressure; or
when the driver has the braking intent and the first electric braking parameter is less than or equal to the first threshold, determine the second brake fluid pressure based on the braking intent.

17. The apparatus according to any one of claims 10 to 16, wherein the control unit is further configured to:
execute the stability control function when the first brake fluid pressure is greater than or equal to a preset pressure value.

18. The apparatus according to any one of claims 10 to 17, wherein the stability control function comprises at least one of an antilock brake system ABS function, an electric brakeforce distribution EBD function, or an electronic stability control ESC function.

19. A control apparatus, comprising:
a memory, configured to store a computer program; and
a processor, configured to execute the computer program stored in the memory, so that the apparatus performs the method according to any one of claims 1 to 9.

20. A control system, comprising the control apparatus according to any one of claims 10 to 19.

21. A vehicle, comprising the control apparatus according to any one of claims 10 to 19, or the control system according to claim 20.

22. A computer-readable storage medium, wherein the computer-readable storage medium stores instructions, and when the instructions are executed by a processor, the processor is enabled to implement the method according to any one of claims 1 to 9.
